# EUROPEAN PATENT SPECIFICATION

(11) **EP 3 173 927 B1**
(45) Date of publication and mention of the grant of the patent: **08.05.2019**
(21) Application number: 15838960.1
(22) Date of filing: 29.01.2015
(51) Int. Cl.: G06F 9/50, G06F 12/02, F24F 11/89

(54) **CONTROL DEVICE AND AIR-CONDITIONING SYSTEM**
STEUERUNGSVORRICHTUNG UND KLIMAANLAGE
DISPOSITIF DE COMMANDE ET SYSTÈME DE CLIMATISATION

(30) Priority: 03.09.2014 JP 2014179284
(43) Date of publication of application: 31.05.2017
(73) Proprietor: Mitsubishi Heavy Industries, Ltd., Tokyo 108-8215 (JP)
(72) Inventor: MATSUO, Minoru, Tokyo 108-8215 (JP); ITO, Takahide, Tokyo 108-8215 (JP); ENYA, Atsushi, Tokyo 108-8215 (JP)
(74) Representative: Intès, Didier Gérard André
(86) International application number: PCT/JP2015/052503
(87) International publication number: WO 2016/035354

(56) References cited:
- JP-A- S59 180 744
- JP-A- S61 228 503
- JP-A- 2012 198 020
- US-A- 5 210 873
- US-A- 5 216 613

## Description

### {Technical Field}

The present invention relates to a control device and an air conditioning system.

### {Background Art}

A multi-type air conditioning system in which one outdoor unit and a plurality of indoor units are connected to each other via a common refrigerant piping has been known. Generally, an outdoor unit and an indoor unit in an air conditioning system are respectively controlled by an outdoor unit control device and an indoor unit control device integrally attached to the outdoor unit and the indoor unit.

### {Citation List}

### {Patent Literature}

{PTL 1} Japanese Unexamined Patent Application, Publication No. 2012-13897

US 5 216 613 discloses a computer system for controlling a plurality of machines. The memory of the computer system includes program and data holding regions for each machine. Machines of the same type share the same program. Control programs are re-entrant and are divided into portions according to operation modes.

US 5 210 873 discloses a real-time computer system for controlling a plurality of distributed processing units. The computer system executes a plurality of re-entrant application programs and its memory comprises program holding and data regions.

### {Summary of Invention}

Embodiments of the invention are defined by the subject-matter of the claims.

### {Technical Problem}

In the aforementioned air conditioning system, the outdoor unit and the indoor units are respectively provided with control devices (processors). Therefore, the respective costs of the indoor units and the outdoor unit increase. The air conditioning system is controlled while the indoor units and the outdoor unit communicate with each other. Therefore, all control programs used for the control need to have the same control version. Thus, some of the indoor units and the outdoor unit constituting the air conditioning system are not easily changed to equipment with a new control specification.

To solve such a problem, the applicants of the present application have considered developing a new air conditioning system in which a control device in an outdoor unit and control devices in indoor units are respectively separated from an outdoor unit main body and indoor unit main bodies and their respective control functions are consolidated into one control device.

The present invention is directed to providing, in an air conditioning system in which respective control functions of a plurality of control targets are consolidated into one control device, like the aforementioned new air conditioning system, a control device and an air conditioning system capable of effectively using memory resources.

### {Solution to Problem}

According to a first aspect of the present invention, there is provided a control device that controls a plurality of control targets, including a main memory, a region assignment means that assigns program holding regions respectively corresponding to equipment types of the control targets and input/output data regions respectively corresponding to the control targets on the main memory, a loading means that loads control programs into the program holding regions, and a program execution means that executes the control programs, in which the control programs are made re-entrant, and the control program written into each of the program holding regions is shared among respective controls of the control targets of the same equipment type.

According to the control device in the aforementioned aspect, the program holding regions respectively corresponding in number to the equipment types of the control targets are assigned on the main memory. In the respective controls of the control targets of the same equipment type, processing is performed using the control program loaded into the program holding region corresponding to the equipment type. Thus, when the program holding regions are respectively assigned for the equipment types, the memory capacity of the program holding regions assigned on the main memory can be more reduced than when the program holding regions respectively corresponding to the control targets are assigned thereon. As a result, memory resources can be effectively used.

In the aforementioned control device, each of the control programs may be created in units of operation modes, and the program execution means may select and execute control programs respectively corresponding to the current operation mode of the control targets.

Each of the control programs is created in units of operation modes. Therefore, when only the control programs respectively corresponding to the current operation mode of the control targets are executed, the respective controls of the control targets can be implemented. As a result, a processing load can be reduced, and processing time can be shortened.

In the aforementioned control device, each of the control programs may be created in units of operation modes, the loading means may load only control programs respectively corresponding to the operation modes of each of the control targets into the program holding region corresponding to the equipment type of the control target, and the program execution means may select and execute the control program corresponding to the current operation mode of the control target among the control programs written into the program region.

Each of the control programs is created in units of operation modes, and only the control programs respectively corresponding to the current operation mode of the control targets are loaded onto the main memory and executed. Therefore, loading time can be shortened, and a processing load can be reduced and processing time can be shortened when the control programs are executed.

The aforementioned control device controls a plurality of control targets including a plurality of indoor units. An output state management region for respectively associating and storing the indoor units and output states is assigned on the main memory, the input/output data region corresponding to the indoor units is divided into input data regions and output data regions, the input data regions are respectively provided to correspond to the indoor units, the output data regions are respectively provided to correspond to the output states corresponding to the indoor units, and the indoor units corresponding to the same registered output state in the output management region share the output data region corresponding to the output state.

According to the aforementioned control device, the input/output data region corresponding to the indoor units is divided into the input data regions and the output data regions, the input data regions are respectively provided to correspond to the indoor units, and the output data regions are respectively dynamically provided to correspond to the output states corresponding to the indoor units. For example, if all the indoor units are in a stop mode and their respective output values are the same, only one output data region is assigned to all the indoor units. Thus, the output data regions are respectively dynamically assigned depending on the output states of the indoor units. Therefore, if there exist a plurality of indoor units respectively having output values approximate to one another, memory resources can be effectively used.

In the aforementioned control device, the control program corresponding to the indoor units may include the steps of comparing an operation mode and input data in one of the indoor units with respective operation modes and input data in the other indoor units corresponding to the already determined output states, and determining whether the other indoor unit satisfying a predetermined approximate condition exists, and storing, when the other indoor unit satisfying the approximate condition exists, the same output state as the output state corresponding to the other indoor unit satisfying the approximate condition in the output state corresponding to the one indoor unit in the output state management region. According to the aforementioned control device, when in the one indoor unit, the operation mode in the other indoor unit satisfying the approximate condition exists, calculation of the output value of the one indoor unit is omitted. Therefore, a processing load can be reduced.
According to a second aspect of the present invention, there is provided an air conditioning system including the aforementioned control device.

### {Advantageous Effects of Invention}

According to the present invention, an effect of effectively using memory resources is produced.

### {Brief Description of Drawings}

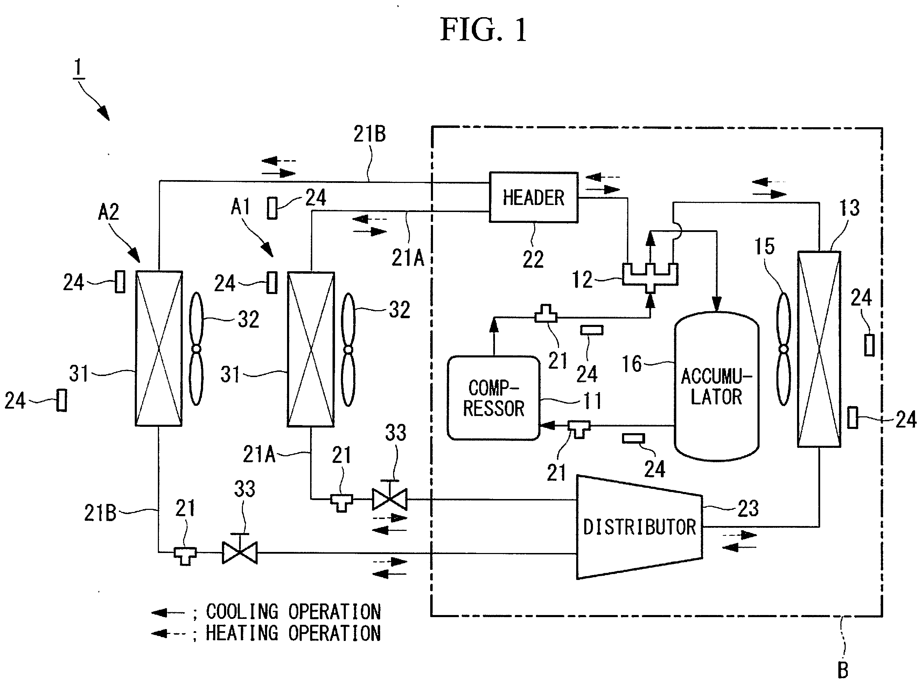

{Fig. 1}
   Fig. 1 is a diagram illustrating a refrigerant system in an air conditioning system according to a first example of the present invention.
{Fig. 2}
   Fig. 2 is an electrical configuration diagram of the air conditioning system according to the first example of the present invention.
{Fig. 3}
   Fig. 3 is a diagram illustrating a hardware configuration of a control device according to the first example of the present invention.
{Fig. 4}
   Fig. 4 is a flowchart illustrating a processing procedure performed by a master control section at the time of startup of the air conditioning system.
{Fig. 5}
   Fig. 5 is a diagram illustrating an example of assignment of regions on a main memory in the control device according to the first example of the present invention.
{Fig. 6}
   Fig. 6 is a diagram illustrating an example of a configuration of an outdoor unit control program according to a second example of the present invention.
{Fig. 7}
   Fig. 7 is a diagram illustrating an example of a configuration of an indoor unit control program according to the second example of the present invention.
{Fig. 8}
   Fig. 8 is a diagram illustrating an example of assignment of regions on a main memory in a control device according to a third example of the present invention.
{Fig. 9}
   Fig. 9 is a flowchart illustrating an example of a procedure for processing an indoor unit control program according to a fourth example of the present invention.
{Fig. 10}
   Fig. 10 is a flowchart illustrating an example of a procedure for processing the indoor unit control program according to the fourth example of the present invention.
{Fig. 11}
   Fig. 11 is a flowchart illustrating an example of a procedure for processing the indoor unit control program according to the fourth example of the present invention.

### {Description of Examples}

Examples in a case where a control device according to the present invention is applied to an air conditioning system will be described below with reference to the drawings. The control device according to the present invention is not only applied to an air conditioning system, described below, but also widely applied to a system in which control functions of respectively controlling a plurality of control targets are consolidated into one control device.

### {First Example}

Fig. 1 is a diagram illustrating a refrigerant system of an air conditioning system 1 according to a first example of the present invention. As illustrated in Fig. 1, the air conditioning system 1 includes one outdoor unit B and a plurality of indoor units A1 and A2 connected to the outdoor unit B via a common refrigerant piping. While a configuration in which the two indoor units A1 and A2 are connected to the one outdoor unit B is illustrated for convenience in Fig. 1, the number of outdoor units to be installed and the number of indoor units to be connected thereto are not limited.

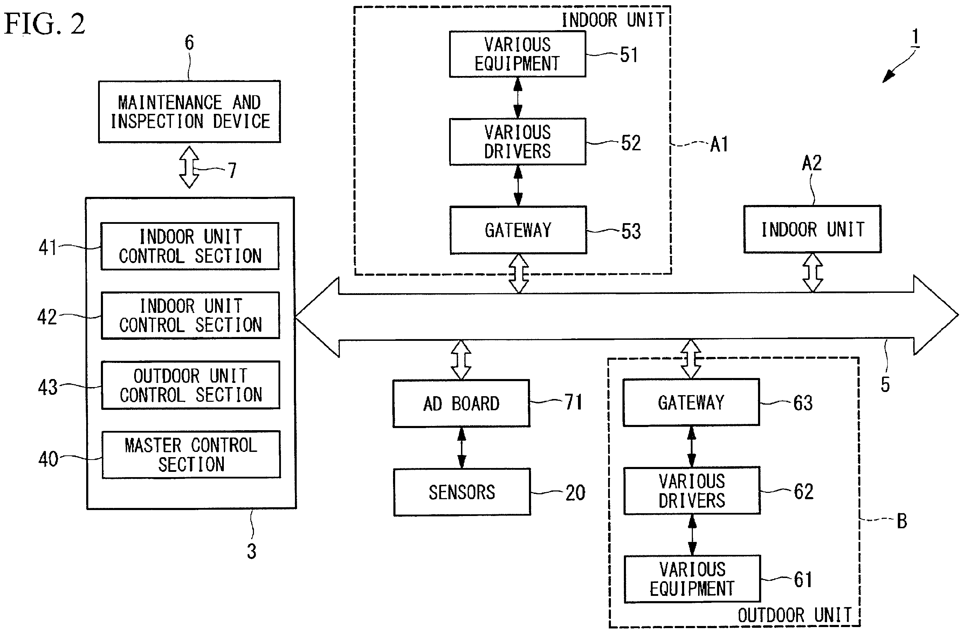

The outdoor unit B includes a compressor 11 that compresses and discharges a refrigerant, a four-way valve 12 that switches a circulation direction of the refrigerant, an outdoor heat exchanger 13 that exchanges heat between the refrigerant and external air, an outdoor fan 15, and an accumulator 16 provided in an suction-side piping of the compressor 11 for the purpose of gas-liquid separation of the refrigerant, for example. Various sensors 20 (see Fig. 2) such as a pressure sensor 21 that measures refrigerant pressure and a temperature sensor 24 that measures refrigerant temperature or the like are provided in the outdoor unit B.

Each of the indoor units A1 and A2 includes an indoor heat exchanger 31, an indoor fan 32, an electronic expansion valve 33, and the like. The two indoor units A1 and A2 are respectively connected to the refrigerant pipings 21A and 21B that branch from each of a header 22 and a distributor 23 in the outdoor unit B.

Fig. 2 is an electrical configuration diagram of the air conditioning system 1 according to the present example. As illustrated in Fig. 2, the indoor units A1 and A2, the outdoor unit B, and a control device 3 are connected to one another via a common bus 5, and are adapted to be able to send and receive information to and from one another. The common bus 5 is an example of a communication medium irrespective of whether communication is wireless or wired.

The control device 3 is connected to a maintenance and inspection device 6, which performs maintenance and inspection, via a communication medium 7, and is adapted to be able to periodically transmit operation data and quickly notify, when an abnormality has occurred, the occurrence of the abnormality.

In the present example, indoor unit control sections 41 and 42 and an outdoor unit control section 43 are respectively provided independently of the indoor units A1 and A2 and the outdoor unit B. More specifically, the indoor unit control section 41 that controls the indoor unit A1, the indoor unit control section 42 that controls the indoor unit A2, and the outdoor unit control section 43 that controls the outdoor unit B are respectively mounted as virtualized control sections on the control device 3.

That is, the indoor unit control sections 41 and 42 and the outdoor unit control section 43 are consolidated into the control device 3 having one hardware, and are made independently operable on the hardware of the control device 3. The control device 3 includes a master control section 40 for causing the indoor unit control sections 41 and 42 and the outdoor unit control section 43 to virtually exist in the control device. Processing for creating the indoor unit control sections 41 and 42 and the outdoor unit control section 43 by the master control section 40, for example, will be described below.

In the control device 3, the indoor unit control sections 41 and 42 and the outdoor unit control section 43 are adapted to be able to send and receive information to and from each other. The indoor unit control sections 41 and 42 and the outdoor unit control section 43 may respectively perform autonomous distributed controls to be independently implemented while sharing information, for example. Here, the autonomous distributed control means that the control section receives information from the sensors 20 and the other control section (e.g., the indoor unit control section 42 and the outdoor unit control section 43 correspond to the other control section if the control section is the indoor unit control section 41) and a predetermined application follows a control rule using the information as an input to issue a control command to the corresponding indoor unit or outdoor unit (e.g., the indoor unit A1 if the control section is the indoor unit control section 41).

In the indoor unit A1, various drivers 52 respectively provided to correspond to various equipment 51 such as the indoor fan 32 and the electronic expansion valve 33 (see Fig. 1) are connected to the common bus 5 via a gateway (communication means) 53. The indoor unit A2 also has a similar configuration to that of the indoor unit A1, although illustration thereof is omitted.

In the outdoor unit B, various drivers 62 respectively provided to correspond to various equipment 61 such as the compressor 11, the four-way valve 12, and the outdoor fan 13 (see Fig. 1) are connected to the common bus 5 via a gateway (communication means) 63.

Each of the gateways 53 and 63 is a gathering of functions including a communication driver, an address storage region, an equipment attribute storage region, an OS (Operating System), and a communication framework, for example. The address storage region is a storage region for storing a specific address previously allocated to communicate with the control device 3 or the like. The equipment attribute storage region is a region for storing its own attribute information and attribute information on the retained equipment 51 or 61, and stores information such as either an indoor unit or an outdoor unit, a capability, on-board sensors (e.g., a temperature sensor and a pressure sensor), equipment information (e.g., the number of taps of a fun and a full pulse of a valve).

Furthermore, the sensors 20 (e.g., a pressure sensor that measures refrigerant pressure and a temperature sensor that measures refrigerant temperature) provided in each of the outdoor unit B and the indoor units A1 and A2 are connected to the common bus 5 via an AD (Analog/Digital) board 71. If the measurement accuracy of the sensors 20 is low, a node having a correction function for correcting a measurement value may be provided between the AD board 71 and the sensors 20. Thus, a sensor, which is low in cost and is not so high in measurement accuracy, can be used as the sensors 20 by being made to have the correction function.

In this air conditioning system, each of the indoor unit control section 41 and 42 in the control device 3 acquires measurement data and control information from the sensors 20 and the various drivers 52 and 62 via the common bus 5, and outputs a control command to the various equipment (e.g., the indoor fans 32 and the electronic expansion valves 33) provided in the indoor unit A1 or A2 by executing a predetermined indoor unit control program based on the measurement data, for example. The control command is sent to the various drivers 52 via the common bus 5 and the gateway 53. The various drivers 52 drive the respectively corresponding equipment based on the received control command. Thus, respective controls of the indoor units A1 and A2 based on the control command are implemented.

Similarly, the outdoor unit control section 43 in the control device 3 acquires measurement data and control information from the sensors 20 and the various drivers 52 and 62 via the common bus 5, and outputs a control command to the various equipment (e.g., the compressor 11, the four-way valve 12, the outdoor heat exchanger 13, and the outdoor fan 15) provided in the outdoor unit B by executing a predetermined outdoor unit control program based on the measurement data. The control command is sent to the various drivers 62 via the common bus 5 and the gateway 63. The various drivers 62 drive the respectively corresponding equipment based on the received control command.

The control device 3 will be specifically described below with reference to the drawings.

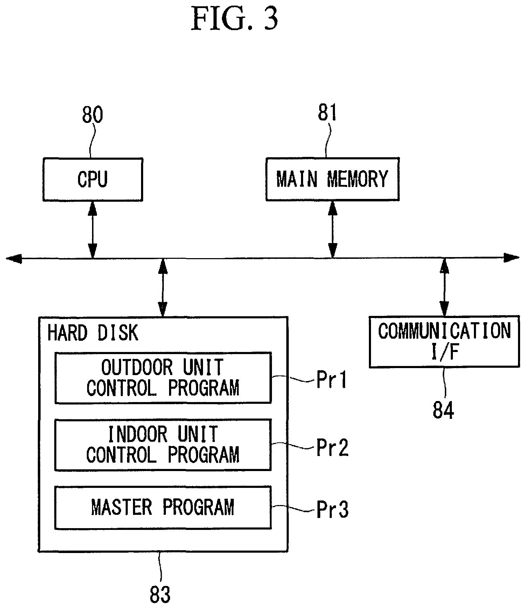

Fig. 3 is a diagram illustrating a hardware configuration of the control device 3. As illustrated in Fig. 3, the control device 3 includes a CPU (Central Processing Unit) 80, a main memory (e.g., a RAM (Random Access Memory)) 81, a hard disk 83, a communication interface 84, and the like. The hard disk 83 stores an outdoor unit control program Pr1, an indoor unit control program Pr2, and a master program Pr3.

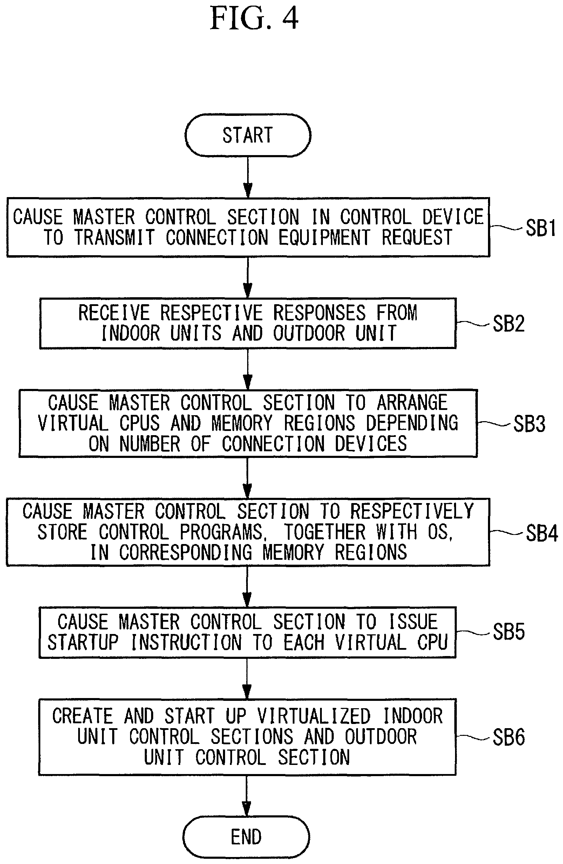

Various types of processing performed in the control device 3 will be described below with reference to Fig. 4.

Fig. 4 is a flowchart illustrating a processing procedure performed by the control device 3 at the time of startup of the air conditioning system. At the time of startup of the air conditioning system 1, the master control section 40 (see Fig. 2) in the control device 3 is first started up. The startup of the master control section 40 is implemented when the CPU 80 in the control device 3 reads out the master program Pr3 in the hard disk 83 into a predetermined region in the RAM 81 and executes the master program Pr3. Here, the master control section 40 is also a control section virtually created in the control device 3.

The master control section 40 first transmits a connection equipment request (step SB1 illustrated in Fig. 4). Thus, the connection equipment request is transmitted to each connection equipment via the common bus 5 (see Fig. 2). The gateway 53 in each of the indoor units A1 and A2 and the gateway 63 in the outdoor unit B, which have received the connection equipment request, read out attribute information from an equipment attribute storage region while reading out address information from an address storage region, associates the information, and return the information to the control device 3 (step SB2).

Thus, the master control section 40 acquires connection of the indoor units A1 and A2 and the outdoor unit B as the connection equipment, the equipment loaded onto each of the indoor units A1 and A2 and the outdoor unit B, and address information thereon.

The master control section 40 grasps the number of pieces of connection equipment based on the received attribute information, and arranges virtual CPUs and memory regions depending on the connection equipment (step SB3: region arrangement means). Thus, in the control device 3, each of the indoor units A1 and A2 and the outdoor unit B is assigned the virtual CPU corresponding thereto while the main memory 81 is assigned the memory region corresponding to an equipment type.

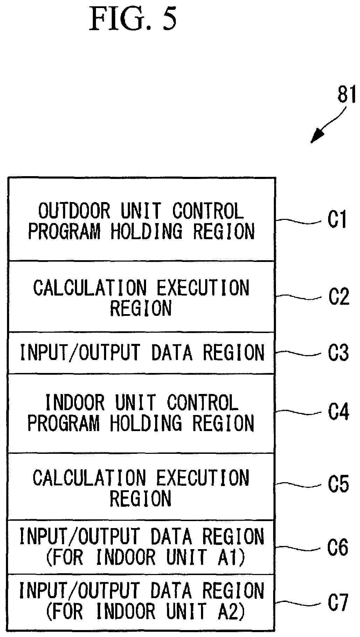

More specifically, an outdoor unit control program holding region C1 corresponding to the outdoor unit B, a calculation execution region C2 corresponding to the outdoor unit control program holding region, an input/output data region C3 corresponding to the outdoor unit B, an indoor unit control program holding region C4 corresponding to the indoor units A1 and A2, a calculation execution region C5 corresponding to the indoor unit control program holding region, and input/output data regions C6 and C7 respectively corresponding to the indoor units A1 and A2 are assigned on the main memory 81, as illustrated in Fig. 5.

Then, the master control section 40 reads out the outdoor unit control program Pr1 and the indoor unit control program Pr2 from the hard disk 83 (see Fig. 3), and respectively stores the outdoor unit control program Pr1 and the indoor unit control program Pr2 in the outdoor unit control program holding region C1 and the indoor unit control program holding region C4 on the main memory 81 (step SB4: loading means). Both of the outdoor unit control program Pr1 and the indoor unit control program Pr2 are made to respectively have re-entrant structures.

Then, the master control section 40 issues a startup instruction to each of the virtual CPUs (step SB5). Thus, when the virtual CPUs respectively execute the control programs stored in the corresponding memory regions, the indoor unit control sections 41 and 42 and the outdoor unit control section 43 are started up so that their respective controls are started (step SB6: program execution means). More specifically, the outdoor unit control section 43 implements the control of the outdoor unit when the virtual CPU executes the outdoor unit control program loaded into the outdoor unit control program holding region C1, and the indoor unit control sections 41 and 42 respectively implement the controls of the indoor units A1 and A2 when the virtual CPUs execute the indoor unit control program loaded into the indoor unit control program holding region C4.

Both of the indoor unit control sections 41 and 42 share the indoor unit control program Pr2 loaded into the indoor unit control program holding region C4. Thus, control targets of the same equipment type share the same control program. Therefore, a memory capacity assigned as the program holding regions on the main memory 81 can be reduced.

After the indoor unit control sections 41 and 42 and the outdoor unit control section 43 are started up, as described above, the master control section 40 may be brought into a stop state or deleted. When the master control section 40 is deleted, the CPU capability of the master control section 40 can be reduced to zero so that compression of other resources can be avoided.

The outdoor unit control program Pr1 and the indoor unit control program Pr2 stored in the aforementioned hard disk are provided on a server connected via a network, and may be downloaded from this server. When periodically downloaded from the server, the program can be automatically updated.

As described above, in the control device 3 and the air conditioning system 1 according to the present example, when the program holding regions respectively holding various types of control programs are arranged on the main memory 81, the program holding regions are not respectively arranged to correspond to the control targets but arranged for the equipment types. That is, if a plurality of control targets of the same equipment type exist, one program holding region may be arranged for the control targets. Therefore, a memory capacity required for the program holding regions can be reduced. Thus, memory resources in the main memory 81 can be effectively used. The calculation execution regions are also respectively provided to correspond to the program holding regions. Therefore, the memory capacity can be reduced.

### {Second Example}

A control device and an air conditioning system according to a second example of the present invention will be described below.

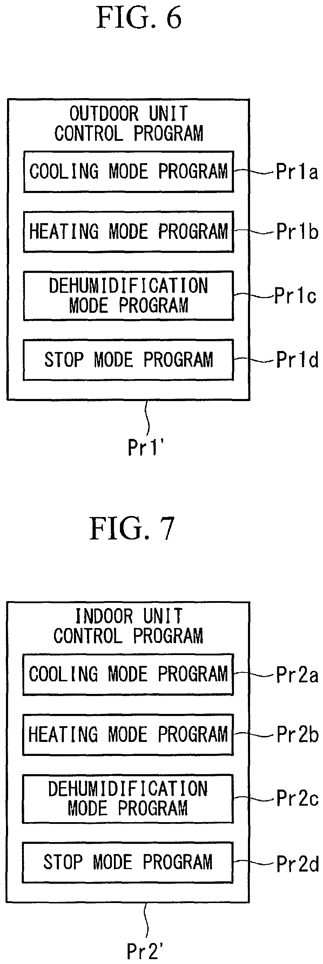

In the present example, each of an outdoor unit control program Pr1 and an indoor unit control program Pr2 is created by being divided in units of operation modes. That is, an outdoor unit control program Pr1' includes a cooling mode program Pr1a, a heating mode program Pr1b, a dehumidification mode program Pr1c, a stop mode program Pr1d, and the like, as illustrated in Fig. 6. Similarly, an outdoor unit control program Pr2' includes a cooling mode program Pr2a, a heating mode program Pr2b, a dehumidification mode program Pr2c, a stop mode program Pr2d, and the like, as illustrated in Fig. 7.

In the present example, the outdoor unit control program Pr1' and the indoor unit control program Pr2' each created in units of operation modes are respectively loaded into an outdoor unit control program holding region C1 and an indoor unit control program holding region C4. When each of virtual CPUs executes a program, the virtual CPUs respectively execute only mode programs corresponding to the current operation mode of control targets, i.e., the operation mode of an outdoor unit B and indoor units A1 and A2. If the outdoor unit B and the indoor units A1 and A2 are in a cooling mode, for example, control of an outdoor unit control section 43 is implemented when the virtual CPU executes the cooling mode program Pr1a in the outdoor unit control program Pr1', and respective controls of indoor unit control sections 41 and 42 are implemented when the virtual CPUs execute the cooling mode program Pr2a in the indoor unit control program Pr2'.

As described above, in the control device and the air conditioning system according to the present example, the control program is created by being divided into the programs for the operation modes, and only the program corresponding to the operation mode among the programs is executed. Thus, processing time can be shortened, and a processing load can be reduced.

In the second example, the outdoor unit control program Pr1' and the indoor unit control program Pr2' each including the control programs corresponding to the plurality of operation modes are respectively loaded into the outdoor unit control program holding region C1 and the indoor unit control program holding region C4. Instead of this, only the programs corresponding to the current operation mode of the outdoor unit B and the indoor units A1 and A2 may be respectively loaded into the program holding regions on a main memory 81. If the outdoor unit B and the indoor units A1 and A2 are in a heating mode, for example, the heating mode program Pr1b in the outdoor unit control program Pr1' is loaded into the outdoor unit control program holding region C1 on the main memory 81 while only the heating mode program Pr2b in the indoor unit control program Pr2' is loaded into the indoor unit control program holding region C2 on the main memory 81. That is, according to this aspect, the dehumidification mode program, the cooling mode program, and the like are not loaded onto the main memory 81.

When a program required for control is thus limited and loaded onto the main memory 81, the main memory 81 can be more effectively used while a period of time required for program loading can be shortened.

### {Third Example}

A control device and an air conditioning system according to a third example of the present invention will be described below.

In each of the aforementioned example, the input/output data regions C3, C6, and C7 respectively corresponding to the outdoor unit B and the indoor units A1 and A2 are arranged on the main memory 81. Instead of this, in the present example, an input/output data region is divided into input data regions and output data regions, the input data regions are respectively arranged to correspond to control targets, i.e., an outdoor unit B and indoor units A1 and A2, and the respective output data regions of the indoor units A1 and A2 are arranged depending on output states.

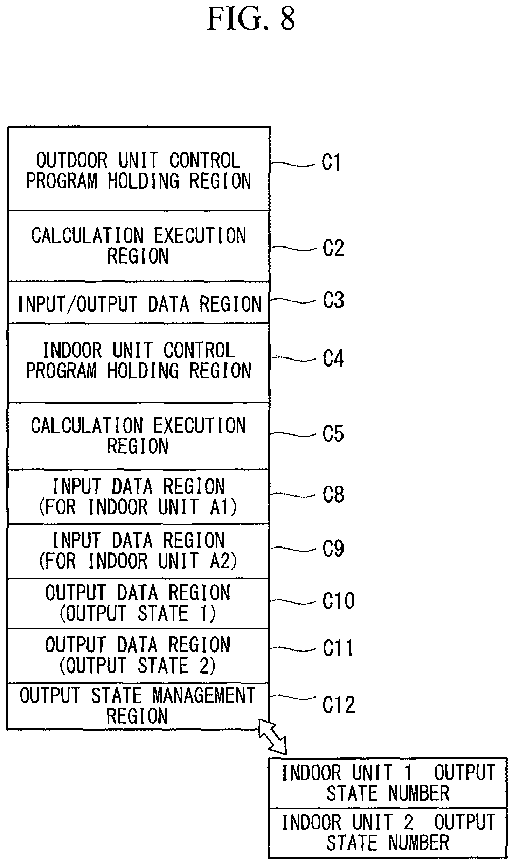

Fig. 8 illustrates an example of assignment of regions on a main
memory 81 according to the present example. As illustrated in Fig. 8, the main memory 81 according to the present example is assigned input data regions C8 and C9 respectively provided to correspond to the indoor units A1 and A2 and output data regions C10 and C11 respectively provided to correspond to output states corresponding to the indoor units. That is, Fig. 8 illustrates region assignment in a case where the indoor unit A1 and the indoor unit A2 respectively correspond to different output states.

In the present example, if a difference between an output value of the indoor unit A1 and an output value of the indoor unit A2 is within a predetermined range, the number of output data regions assigned on the main memory 81 is one, and this output data region is shared between the indoor units A1 and A2. For an output value to be written into the output data region in this case, methods such as a method for writing the output value of either one of the indoor units, a method for writing an average of the respective output values of the indoor units, or a method for writing the output value of the indoor unit the output value of which has been first calculated can be adopted.

As illustrated in Fig. 8, the main memory 81 is assigned an output state management region C12 for managing the output states respectively corresponding to the indoor units A1 and A2. Identification information (e.g., an output state number) on the output state corresponding to each of the indoor units A1 and A2 is written into this output state management region C12. Since this output state number and an identification number of the output data region are associated with each other, it can be determined in which output state each of the indoor units A1 and A2 is and which output data region may be used.

As described above, in the control device and the air conditioning
system according to the present example, the output data region is assigned depending on the output state corresponding to each of the indoor units A1 and A2.

Therefore, if there exist a plurality of indoor units respective output values of which are identical or approximate to one another, the number of output data regions to be assigned on the main memory 81 can be reduced.

### {Fourth Examples}

A control device and an air conditioning system according to a fourth
example of the present invention will be described below.

In the aforementioned third example, the shared output data region is used for the indoor units corresponding to the same output state. If respective operation environments of indoor units are approximate to one another, their respective output values can be said to be almost the same.

Accordingly, in the present example, if an output value of a given indoor unit (e.g., "an indoor unit 1") has already been calculated, processing for calculating an output value of an indoor unit (e.g., "an indoor unit 2"), which is approximate in operation environment to the indoor unit 1, is omitted, and the same output value as the already calculated output value of the indoor unit 1 is used for this indoor unit 2.

More specifically, it is determined whether among indoor units respective output values of which have already been calculated, the indoor unit satisfying a predetermined approximate condition, described below, exists. If the indoor unit satisfying the predetermined approximate condition exists, the output value of the indoor unit is diverted while the same output data region as that used for the indoor unit is used.

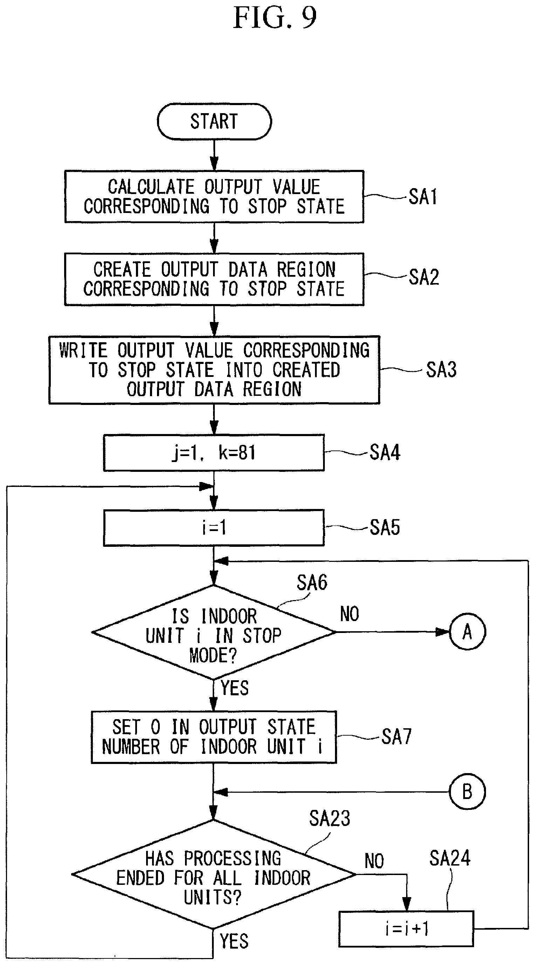

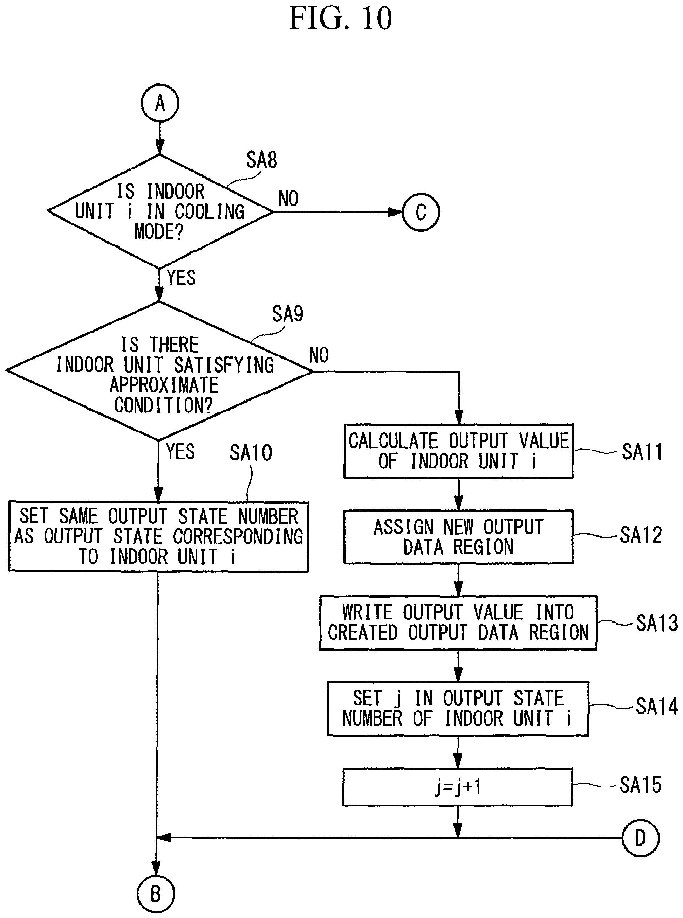

An example of a procedure for processing an indoor unit control program according to the present example will be described below with reference to Figs. 9 and 10.

This indoor unit control program is a program to be loaded into an indoor unit control program holding region C4 on a main memory 81, and is implemented when executed by a virtual CPU.

First, the virtual CPU calculates an output value corresponding to a stop state (step SA1). Thus, control values of each equipment in a stop mode, e.g., the opening of an expansion valve 33 (see Fig. 1), the angle of a flap, and the angle of a louver are calculated.

Then, the virtual CPU assigns an output data region corresponding to the stop state on the main memory 81 (step SA2), and writes output values corresponding to the stop state (the opening of the expansion valve 33, the angle of the flap, and the angle of the louver) into the created output data region (step SA3).

Then, the virtual CPU sets 1 in an output state number j corresponding to a cooling mode, and sets 81 in an output state number k corresponding to a heating mode (step SA4). Then, the virtual CPU sets 1 in an indoor unit number i (step SA5).

The virtual CPU then determines whether the indoor unit i (e.g., the indoor unit A1) is in a stop mode. As a result, if the indoor unit i is in the stop mode ("YES" instep SA6), the virtual CPU sets an output state number 0 indicating a stop state in an output state corresponding to the indoor unit i in an output state management region C10 (see Fig. 8) (step SA7).

On the other hand, if the indoor unit i is not in the stop mode in step SA6 ("NO" in step SA6), the virtual CPU determines whether the indoor unit i is in the cooling mode (step SA8 illustrated in Fig. 10). As a result, if the indoor unit i is in the cooling mode ("YES" in step SA8), the virtual CPU determines whether among indoor units respective output values of which have already been calculated, that is, among indoor units respective output state numbers of which have been set in the output state management region C10, the other indoor unit satisfying an approximate condition to that satisfied by the indoor unit i exists (step SA9).

Whether an approximate condition is satisfied is determined based on operation modes and input data. If operation modes are the same and a difference in deviation between a set temperature and a suction temperature is within a reference range, it is determined that the approximate condition is satisfied. For example, if a deviation ΔTi between a set temperature and a suction temperature of the indoor unit i is calculated while a deviation ΔTa between a set temperature and a suction temperature of the other indoor unit is calculated, a difference between the deviations (ΔTi - ΔTa) is within a reference range (e.g., within 0.5°C), and both of the indoor unit i and the other indoor unit are in the same operation mode, it is determined that the approximate condition is satisfied.

Whether an approximate condition is satisfied is not limited to the aforementioned example. Whether the approximate condition is satisfied may be determined depending on whether the square sum of deviations among all input data is within a predetermined reference range or may be determined depending on whether deviations among cooling/heating capabilities respectively exhibited by indoor units are within a predetermined reference range.

As a result, if it is determined that the indoor unit satisfying an approximate condition to that satisfied by the indoor unit i exists among the indoor units the respective output values of which have already been calculated ("YES" instep SA9), the virtual CPU sets the same output state number as that of the indoor unit satisfying the approximate condition as the output state corresponding to the indoor unit i in the output state management region (step SA10). Thus, the same output data region as that used for the indoor unit satisfying the approximate condition is used for the indoor unit i, and the same output value is output.

On the other hand, if the other indoor unit satisfying the approximate condition does not exist in step SA9, the virtual CPU calculates the output value of the indoor unit i (step SA11). Then, the virtual CPU assigns a new output data region on the main memory 81 (step SA12), and writes the output value of the indoor unit i, which has been calculated in step SA11, into this output data region (step SA13). Then, the virtual CPU sets the output state number j indicating an output value in the cooling mode in the output state corresponding to the indoor unit i in the output state management region C10 (see Fig. 8) (step SA14). Then, the virtual CPU increments the output state number j (step SA15).

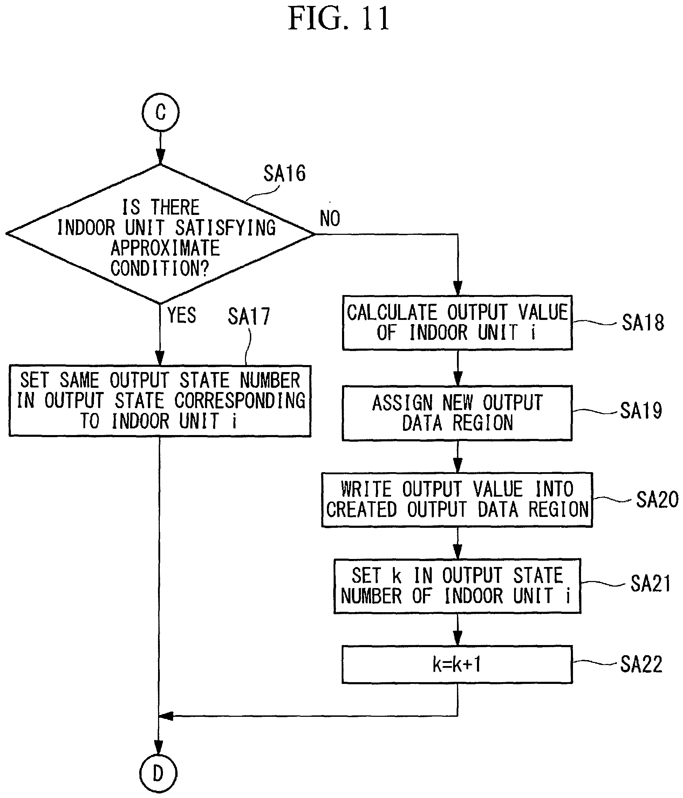

If the indoor unit i is not in the cooling mode in the aforementioned step SA8 ("NO" in step SA8), the virtual CPU determines whether among the indoor units the respective output values of which have already been calculated, the other indoor unit satisfying an approximate condition to that satisfied by the indoor unit i exists (step SA16 illustrated in Fig. 11).

As a result, if the indoor unit satisfying the approximate condition to that satisfied by the indoor unit i exists among the indoor units the respective output values of which have already been calculated ("YES" instep SA16), the virtual CPU sets the same output state number as that of the indoor unit satisfying the approximate condition as the output state corresponding to the indoor unit i in the output state management region (step SA17 illustrated in Fig. 11). Thus, the same output data region as that used for the indoor unit satisfying the approximate condition is used for indoor unit i, and the same output value is output.

On the other hand, if the other indoor unit satisfying the approximate condition does not exist in step SA16, the virtual CPU calculates the output value of the indoor unit i (step SA8). Then, the virtual CPU assigns a new output data region on the main memory 81 (step SA19), and writes the output value of the indoor unit i, which has been calculated in step SA18, into this output data region (step SA20). Then, the virtual CPU sets the output state number k indicating the output value in the heating mode in the output state corresponding to the indoor unit i in the output state management region C10 (see Fig. 8) (step SA21). Then, the virtual CPU increments the output state number k (step SA22).

If processes in the aforementioned steps SA7, SA10, SA15, SA17, and SA22 end, the processing proceeds to step SA23 illustrated in Fig. 9. In step SA23, the virtual CPU determines whether the processing has ended for all the indoor units. That is, the virtual CPU determines whether the current indoor unit number i matches the number of indoor units. As a result, if the processing has not ended for all the indoor units, the virtual CPU increments the indoor unit number i in step SA24, and the processing returns to step SA6.

On the other hand, if the processing has been completed for all the indoor units in step SA23, the processing returns to step SA5. In step SA5, the virtual CPU sets 1 in the indoor unit number i, and the aforementioned processing is performed again for each of the indoor units.

As described above, in the control device and the air conditioning
system according to the present example, it is determined whether among the other indoor units the respective output values of which have already been calculated, the other indoor unit satisfying the approximate condition to that
satisfied by the indoor unit exists. If the other indoor unit satisfying the approximate condition exists, processing for calculating the output value of the indoor unit is omitted, and the output value of the other indoor unit satisfying the approximate condition is used as the output value of the indoor unit. Thus, for the indoor units that are approximate to one another in input, the output values can be obtained without performing normal calculation processing for obtaining the output values. Thus, a processing load can be reduced, and processing time can be expected to be shortened.

Furthermore, when a shared output data region is used for the indoor units corresponding to the same output state, like in the
aforementioned third example, resources can be effectively used.

When ranges of the output state numbers to be added are respectively determined in the cooling mode and the heating mode (e.g., a number between 1 to 80 is added as the output state number in the cooling mode and a number between 81 and 160 is added as the output state number in the heating mode), the operation mode can be grasped from the output state number. Thus, the operation mode of each of indoor units can be easily grasped.

The present invention is not limited to only the aforementioned examples. For example, various modifications can be implemented by partly or wholly combining the
aforementioned examples. While the outdoor unit control program and the indoor unit control program are loaded onto the main memory from the hard disk and
executed in each of the aforementioned examples, a program may be directly executed on a ROM (Read-Only Memory), for example, without being developed into the main memory. In this case, information may be developed into a RAM, as needed, when the program is executed.

### {Reference Signs List}

1 Air conditioning system 3 Control device 40 Master control section 41, 42 Indoor unit control section 43 Outdoor unit control section 80 CPU 81 Main memory 83 Hard disk 84 Communication interface A1, A2 Indoor unit B Outdoor unit

## Claims

1. A control device (3) that controls a plurality of control targets
comprising:
a main memory (81);
a region assignment means configured to assign in the main memory (81), program holding regions respectively corresponding to equipment types of the control targets
and data regions respectively corresponding to the control targets;
a loading means configured to load control programs into the program holding regions; and
a program execution means configured to execute the control programs,
wherein the control programs are made re-entrant, and
the control program written into each of the program holding regions is shared among respective controls of the control targets of the same equipment type,
the control device (3) being **characterized in that** the plurality of control targets include a plurality of indoor units (A1, A2),
the data regions are input/output data regions,
an output state management region for respectively storing an association between the indoor units (A1, A2) and output states is further assigned in the main memory (81),
the input/output data region corresponding to the indoor units (A1, A2) is divided into input data regions and output data regions,
the input data regions are respectively provided to correspond to the indoor units (A1, A2),
the output data regions are respectively provided to correspond to the output states corresponding to the indoor units (A1, A2), and
the indoor units (A1, A2) corresponding to the same registered output state in the output management region share the output data region corresponding to the output state.

2. The control device (3) according to claim 1, wherein
the control programs are created by being divided into parts corresponding to operation modes, and
the program execution means are configured to select and to execute control programs respectively corresponding to the current operation mode of the control targets.

3. The control device (3) according to claim 1, wherein
the control programs are created by being divided into parts corresponding to operation modes,
the loading means is configured to load only control programs respectively corresponding to the operation modes of each of the control targets into the program holding region corresponding to the equipment type of the control target, and
the program execution means is configured to select and to execute the control program corresponding to the current operation mode of the control target among the control programs written into the program region.

4. The control device (3) according to any one of claims 1 to 3, wherein the control program corresponding to the indoor units (A1, A2) comprises the steps of:
comparing an operation mode and input data in one of the indoor units (A1, A2) with respective operation modes and input data in the other indoor units (A1, A2) corresponding to the already determined output states, and determining whether the other indoor unit (A1, A2) satisfying a predetermined approximate condition exists; and
storing, when the other indoor unit (A1, A2) satisfying the approximate condition exists, the same output state as the output state corresponding to the other indoor unit (A1, A2) satisfying the approximate condition in the output state corresponding to the one indoor unit (A1, A2) in the output state management region.

5. An air conditioning system (1) comprising the control device (3) according to any one of claims 1 to 4.

## Patentansprüche

1. Steuervorrichtung (3), die eine Mehrzahl von Zielsteuerungen steuert, umfassend:
einen Hauptspeicher (81);
ein Bereichszuordnungsmittel, das so konfiguriert ist, dass es im Hauptspeicher (81) Programmhaltebereiche zuweist, die jeweils den Gerätearten der Zielsteuerungen entsprechen, und Datenbereiche, die jeweils den Zielsteuerungen entsprechen;
ein Lademittel, das so konfiguriert ist, dass es Steuerprogramme in die Programmhaltebereiche lädt; und
ein Programmausführungsmittel, das zum Ausführen der Steuerprogramme konfiguriert ist,
wobei die Steuerprogramme wiederholend eingestellt werden, und
das in jeden der Programmhaltebereiche geschriebene Steuerprogramm von den jeweiligen Steuerungen der Zielsteuerungen der gleichen Geräteart geteilt wird,
wobei die Steuervorrichtung (3) **dadurch gekennzeichnet ist, dass**
die Mehrzahl der Zielsteuerungen eine Mehrzahl von Innengeräten (A1, A2) aufweist,
wobei die Datenbereiche Ein-/Ausgabedatenbereiche sind,
ein Ausgabestatus-Verwaltungsbereich zum jeweiligen Speichern einer Zuordnung zwischen den Innengeräten (A1, A2) und Ausgabestatus im Hauptspeicher (81) ferner zugeordnet ist,
der Ein-/Ausgabedatenbereich, der den Innengeräten (A1, A2) entspricht, in Eingabedatenbereiche und Ausgabedatenbereiche unterteilt ist,
die Eingabedatenbereiche jeweils so bereitgestellt sind, dass sie den Innengeräten (A1, A2) entsprechen,
die Ausgabedatenbereiche jeweils so bereitgestellt sind, dass sie den Ausgabestatus entsprechen, die den Innengeräten (A1, A2) entsprechen, und
die Innengeräte (A1, A2), die dem gleichen registrierten Ausgabestatus im Ausgabeverwaltungsbereich entsprechen, den dem Ausgabezustand entsprechenden Ausgabedatenbereich teilen.

2. Steuervorrichtung (3) nach Anspruch 1, wobei
die Steuerprogramme dadurch erstellt werden, dass sie in den Betriebsmodi entsprechende Teile unterteilt werden, und
die Programmausführungsmittel so konfiguriert sind, dass sie Steuerprogramme auswählen und ausführen, die jeweils dem aktuellen Betriebsmodus der Zielsteuerungen entsprechen.

3. Steuervorrichtung (3) nach Anspruch 1, wobei
die Steuerprogramme dadurch erstellt werden, dass sie in den Betriebsmodi entsprechende Teile unterteilt werden,
das Lademittel so konfiguriert ist, dass es nur jeweils den Betriebsmodi jeder der Zielsteuerungen entsprechende Steuerprogramme in den Programmhaltebereich lädt, der der Geräteart der Zielsteuerung entspricht, und
die Programmausführungseinrichtung so konfiguriert ist, dass sie das Steuerprogramm entsprechend dem aktuellen Betriebsmodus der Zielsteuerung unter den in den Programmbereich geschriebenen Steuerprogrammen auswählt und ausführt.

4. Steuervorrichtung (3) nach einem der Ansprüche 1 bis 3, wobei das den Innengeräten (A1, A2) entsprechende Steuerprogramm die folgenden Schritte umfasst:
Vergleichen eines Betriebsmodus und von Eingabedaten in einem der Innengeräte (A1, A2) mit jeweiligen Betriebsmodi und Eingabedaten in den anderen Innengeräten (A1, A2), die den bereits bestimmten Ausgabezuständen entsprechen, und Bestimmen, ob das andere Innengerät (A1, A2) vorhanden ist, das eine vorbestimmte ungefähre Bedingung erfüllt; und
Speichern, wenn das andere Innengerät (A1, A2), das die ungefähre Bedingung erfüllt, vorhanden ist, des gleichen Ausgabezustands wie der Ausgabezustand, der dem anderen Innengerät (A1, A2) entspricht, das den ungefähren Zustand im Ausgabezustand erfüllt, der dem einen Innengerät (A1, A2) im Ausgabestatus-Verwaltungsbereich entspricht.

5. Klimaanlage (1), umfassend die Steuervorrichtung (3) nach einem der Ansprüche 1 bis 4.

## Revendications

1. Dispositif de commande (3) qui commande une pluralité de cibles de commande comprenant :
une mémoire principale (81) ;
un moyen d'affectation de zone configuré pour affecter, dans ladite mémoire principale (81), des zones de conservation de programme qui correspondent respectivement à des types d'équipements des cibles de commande, et des zones de données qui correspondent respectivement aux cibles de commande ;
un moyen de chargement configuré pour charger des programmes de commande dans les zones de conservation de programme ; et
un moyen d'exécution de programme configuré pour exécuter les programmes de commande,
dans lequel les programmes de commande sont rendus réentrants, et
le programme de commande écrit dans chacune des zones de conservation de programme est partagé entre les commandes respectives des cibles de commande du même type d'équipement,
le dispositif de commande (3) étant **caractérisé en ce que**
la pluralité de cibles de commande comprend une pluralité d'unités d'intérieur (A1, A2),
les zones de données sont des zones de données d'entrée/de sortie,
une zone de gestion d'état de sortie destinée à stocker respectivement une association entre les unités d'intérieur (A1, A2) et les états de sortie est en outre affectée dans la mémoire principale (81),
la zone de données d'entrée/de sortie correspondant aux unités d'intérieur (A1, A2) est divisée en zones de données d'entrée et en zones de données de sortie,
les zones de données d'entrée sont respectivement prévues afin de correspondre aux unités d'intérieur (A1, A2),
les zones de données de sortie sont respectivement prévues pour correspondre aux états de sortie qui correspondent aux unités d'intérieur (A1, A2), et
les unités d'intérieur (A1, A2) qui correspondent au même état de sortie enregistré dans la zone de gestion de sortie partagent la zone de données de sortie qui correspond à l'état de sortie.

2. Dispositif de commande (3) selon la revendication 1, dans lequel
les programmes de commande sont créés en étant divisés en parties qui correspondent aux modes de fonctionnement, et
le moyen d'exécution de programme est configuré pour sélectionner et pour exécuter les programmes de commande qui correspondent respectivement au mode de fonctionnement actuel des cibles de commande.

3. Dispositif de commande (3) selon la revendication 1, dans lequel
les programmes de commande sont créés en étant divisés en parties qui correspondent aux modes de fonctionnement,
le moyen de chargement est configuré pour charger uniquement les programmes de commande qui correspondent respectivement aux modes de fonctionnement de chacune des cibles de commande dans la zone de conservation de programme qui correspond au type d'équipement de la cible de commande, et
le moyen d'exécution de programme est configuré pour sélectionner et pour exécuter le programme de commande qui correspond au mode de fonctionnement actuel de la cible de commande parmi les programmes de commande écrits dans la zone de programme.

4. Dispositif de commande (3) selon l'une quelconque des revendications 1 à 3, dans lequel le programme de commande qui correspond aux unités d'intérieur (A1, A2) comprend les étapes suivantes :
la comparaison d'un mode de fonctionnement et de données d'entrée dans l'une des unités d'intérieur (A1, A2) avec les modes de fonctionnement respectifs et les données d'entrée dans les autres unités d'intérieur (A1, A2) qui correspondent aux états de sortie déjà déterminés, et la détermination du fait que l'autre unité d'intérieur (A1, A2) qui satisfait une condition d'approximation prédéterminée existe ou non ; et
le stockage, lorsque l'autre unité d'intérieur (A1, A2) qui satisfait la condition d'approximation existe, du même état de sortie que l'état de sortie qui correspond à l'autre unité d'intérieur (A1, A2) qui satisfait la condition d'approximation dans l'état de sortie qui correspond à l'unité d'intérieur (A1, A2) dans la zone de gestion d'état de sortie.

5. Système de climatisation (1) comprenant le dispositif de commande (3) selon l'une quelconque des revendications 1 à 4.
